# EUROPEAN PATENT APPLICATION

(11) **EP 1 622 141 A1**
(43) Date of publication of application: **01.02.2006**
(21) Application number: 05076521.3
(22) Date of filing: 01.07.2005
(51) Int. Cl.: G11B 17/04, G11B 33/08

(54) **Vibration preventing device and optical disc drive having the same**

(30) Priority: 28.07.2004 KR 2004059214
(71) Applicant: Samsung Electronics Co, Ltd, Suwon-si, Gyeonggi-do (KR)
(72) Inventor: Lee, Jeung-rak, Gweonseon-gu,Suwon-si,Gyeonggi-do (KR); Lee, Young-bok, Dongjak-gu,Seoul (KR)
(74) Representative: Jackson, Nicholas Andrew

(57) **Abstract**

An optical disc drive having a vibration preventing device (130) includes a main frame (110) having sidewalls (111, 112) and a rear wall (113) and guide rails (1a, 1b) inside the sidewalls (111, 112); a disc tray (120) with supporting steps (121) to move to a disc loading/unloading position while supported by the guide rails (1a, 1b) to slide; and four elastic guides (140) to absorb vibration of the disc tray (120) by external impact and/or disc rotation by pressing and supporting the disc tray from up to down elastically, the elastic guides (140) formed in the sidewalls (111, 112) to confront each other with a predetermined space. Since the elastic guides (140) support the disc tray (120) by pressing the disc tray (120) in both sides of the back and front from up to down, the vibration of the disc tray (120) may be prevented effectively. Although the disc tray is ejected to a disc unloading position, the disc tray (120) is not shaken because the disc tray (120) is still supported by two elastic guides (140).

## Description

The present invention relates to a vibration preventing device and, more particularly, to a vibration preventing device to prevent the vibration of devices, such as compact discs (CDs), digital versatile discs (DVDs) and the like, and to an optical disc drive having the vibration preventing device included therein.

Generally, optical disc drives to record or reproduce information on or form an optical recording medium such as compact discs (CDs) and digital versatile discs (DVDs), are excellent at reproducing data because these devices record or reproduce data in a non-contact manner by using a pickup unit. However, the optical disc drives using a pickup unit have a shortcoming in that they are weak in vibration. Indeed, recently, as the disc access time of optical disc drives has become even faster, the matter of vibration repression and prevention rises as a significant issue.

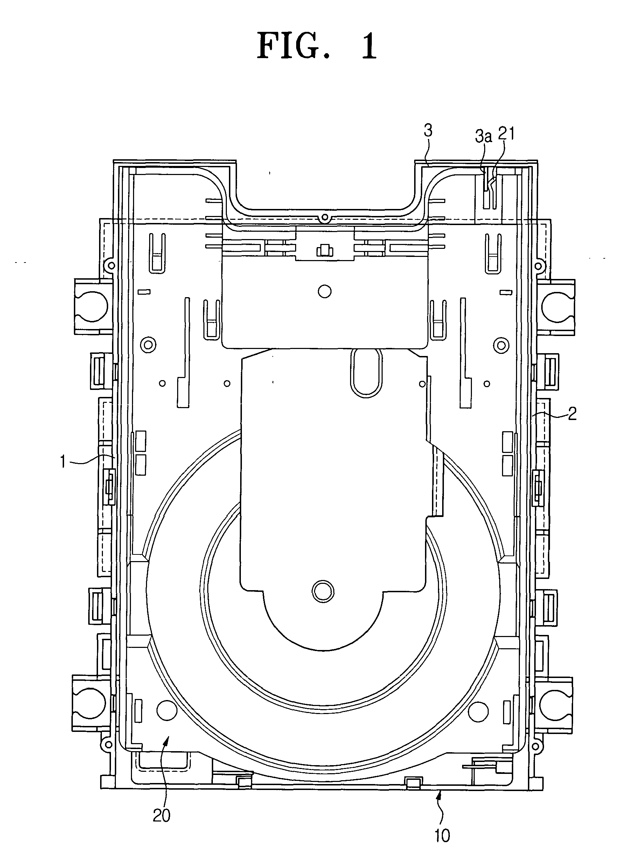

Figures 1 to 3 illustrate an optical disc drive that includes a conventional vibration preventing device. As shown in figures 1 to 3, the conventional optical disc drive includes a main frame 10 having both sidewalls 1 and 2 and a rear wall 3 and a disc tray 20 placed in the main frame 10. An optical disc (not shown) would be mounted on the disc tray 20. The disc tray 20 may move in and out of the main frame 10 to load/unload a disc.

The main frame 10 includes guide rails 1 a and 2a that are formed on the sidewalls 1 and 2 as well as guide grooves 20a and 20b that are formed in the disc tray 20.

One or two guide ribs 3a are formed in the rear wall 3. A tension rib 21 is formed in the disc tray 20 to be elastically brought into contact with the guide ribs 3a when the disc tray 20 moves to a disc loading position.

The tension rib 21 prevents the disc tray 20 from vibrating by absorbing the vibration that is caused by external force and/or the vibration that is generated during the rotation of an optical disc. Thus, vibration-induced noise is not generated.

In the above-described conventional optical disc drive, however, the disc tray 20 may still vibrate in the up and down and right and left directions due to the gap between the guide rails 1a and 2a and the guide grooves 20a and 20b, which are formed for the smooth movement of the disc tray 20. The guide rails 1a and 2a and the guide grooves 20a and 20b will be referred to as a sliding unit collectively herein. Although the conventional optical disc drive has the one or two guide ribs 3a and tension rib 21 to prevent the disc tray 20 from vibrating, the vibration preventing force is substantially neutralized due to the gap in the sliding unit. Therefore, noise may be generated by the vibration.

Moreover, as the disc access time of the optical disc drive becomes much faster as has been the recent trend, vibration generated in the disc tray 20 becomes more serious. This calls for the development of a more effective vibration preventing device.

Further, the conventional optical disc drives adopts a vibration preventing device that supports the rear end of the disc tray 20 against the rear wall 3 of the main frame 10. Therefore, if the disc tray 20 is ejected out of the main frame 10 to a disc unloading position, the disc cannot be supported and moves in the up and down directions. Since this problem may prevent an optical disc drive from becoming a high-quality and high-end product, the problem of having an unsupported disc in the above-noted situation should be solved.

According to the present invention there is provided an apparatus and method as set forth in the appended claims. Preferred features of the invention will be apparent from the dependent claims, and the description which follows.

The present invention also provides a vibration preventing device that prevents vibration of a disc tray of an optical disc drive having a fast disc access time by increasing the number of disc tray vibration preventing units.

The present invention also provides a vibration preventing device that may increase the vibration preventing effect and minimize shaking of the disc tray during the ejection of the disc tray by elastically pressing and supporting the disc tray from the upper part thereof to the lower part thereof.

The present invention provides an optical disc drive including the vibration preventing device having the above described characteristics.

In one aspect of the present invention a vibration preventing device to absorb vibration caused by external impact between a first member having sidewalls and a rear wall and a second member installed in the first member wherein the second member is capable of coming in and out of the first member. The present invention further includes a plurality of elastic guides formed in the first member to press and support the second member elastically in a direction of up to down.

The present invention may also include a vibration preventing device wherein the number of elastic guides is four and the four elastic guides are formed in both sidewalls of the first member to confront each other with a predetermined space.

A fixing groove may be formed in an area where an elastic guide is set up on a sidewall, and the elastic guides include a body unit to be inserted to the fixing groove, a tension unit extended from the body unit to be brought into contact with the second member, and a supporting unit formed apart from the tension unit by a predetermined space to be supported against the external side of the sidewall.

The present invention may also include a vibration preventing device including a second vibration preventing unit including a guide rib formed in the rear wall of the first member and a tension rib formed in the second member to be brought into contact with the guide rib elastically when the second member goes to a withdrawal position.

The second vibration preventing unit may include two guide ribs and two tension ribs.

In accordance with another aspect of the present invention, there is provided an optical disc drive, which includes: a main frame having both sidewalls and a rear wall and having guide rails in the inner side of the sidewalls; a disc tray having supporting steps in both edges and moving to a disc loading position or a disc unloading position while supported by the guide rails of the main frame to slide; and two pairs of elastic guides for absorbing vibration of the disc tray caused by external impact and/or rotation of a disc by pressing and supporting the disc tray from the upper part to the lower part elastically, the two pairs of elastic guides being formed in the sidewalls to confront each other with a predetermined space.

The vibration of the disc tray may be prevented effectively because two pairs of elastic guides press and support the disc tray from the upper part to the lower part in both sides of the back and front elastically. Even though the disc tray is ejected out to a disc unloading position, the disc tray may still be supported by two elastic guides and thus it is not shaken.

Additional and/or other aspects and advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 is a plan view showing an optical disc drive adopting a conventional vibration preventing device;
FIG. 2 is an enlarged view of an essential part of FIG. 1;
FIG. 3 is a cross-sectional view of FIG. 1;
FIG. 4A is a plan view illustrating a main frame of an optical disc drive adopting a vibration preventing device in accordance with an embodiment of the present invention;
FIG. 4B is a side view of FIG. 4A;
FIG. 5 is a perspective view illustrating an elastic guide, which is an essential part, in accordance with an embodiment of the present invention;
FIGS. 6A and 6B are side-sectional views describing a disc tray in a loading and unloading position in the optical disc drive adopting the vibration preventing device in accordance with the present invention; and
FIG. 7 is a front-sectional view of FIG. 6A.

Reference will now be made in detail to the embodiments of the present invention, examples of which are illustrated in the accompanying drawings, wherein like reference numerals refer to the like elements throughout. The embodiments are described below to explain the present invention by referring to the figures.

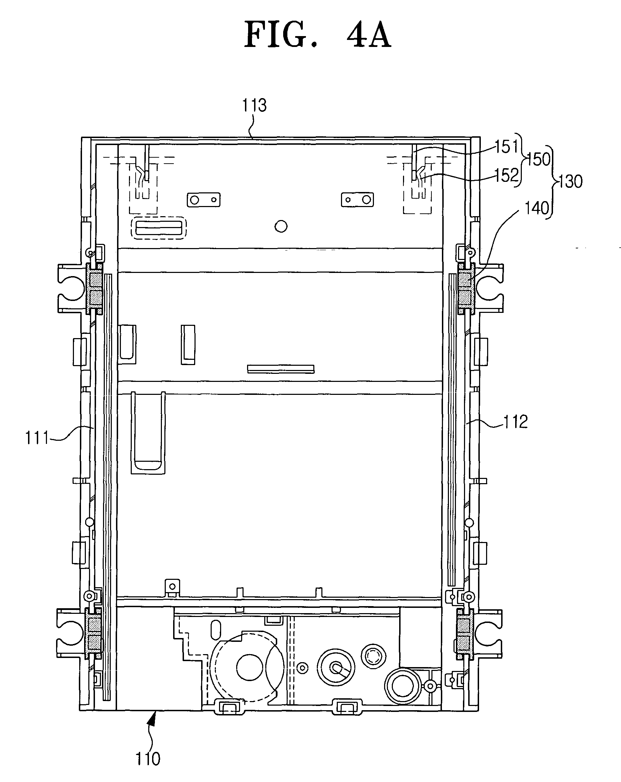

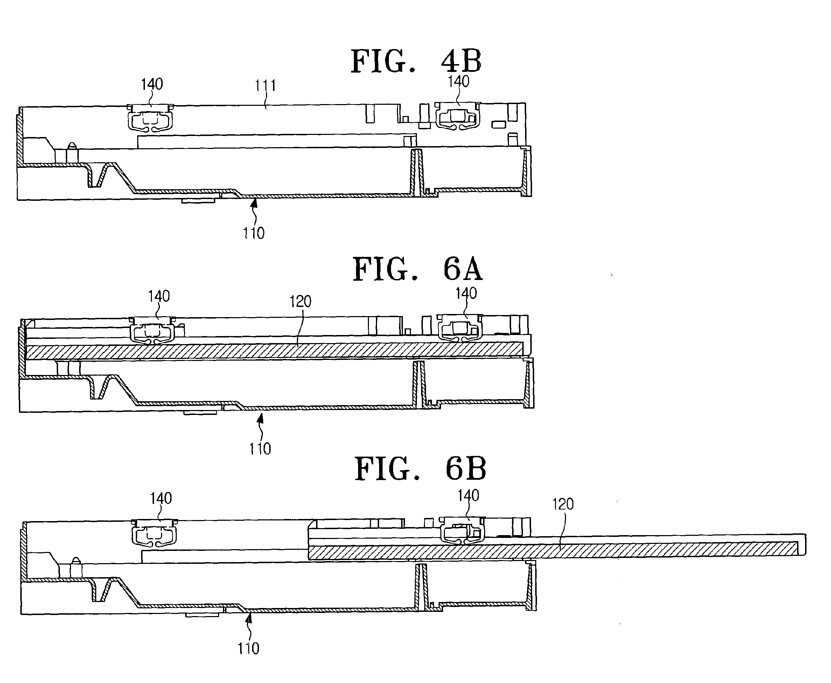

As illustrated in Figures 4A to 7, an optical disc drive of one embodiment of the present invention includes a main frame 110, a disc tray 120, and a vibration preventing device formed between the main frame 110 and the disc tray 120 to prevent the disc tray 120 from vibrating by external impact and/or the rotation of a disc.

The main frame 110 includes both sidewalls 111 and 112 and a rear wall 113. The sidewalls 111 and 112 have a fixing groove 111a formed in appropriate positions to set up an elastic guide in the vibration preventing device 130, which will be described later on. A loading mechanism to move the disc tray 120 to the disc loading and unloading positions is placed in an appropriate position. Additionally, a pickup unit to record/reproduce information in the disc is placed in an appropriate position. The structures of the loading mechanism and the pickup unit are not characterized in the present invention and, since they can be understood as generally known technology, further description on them will be omitted herein.

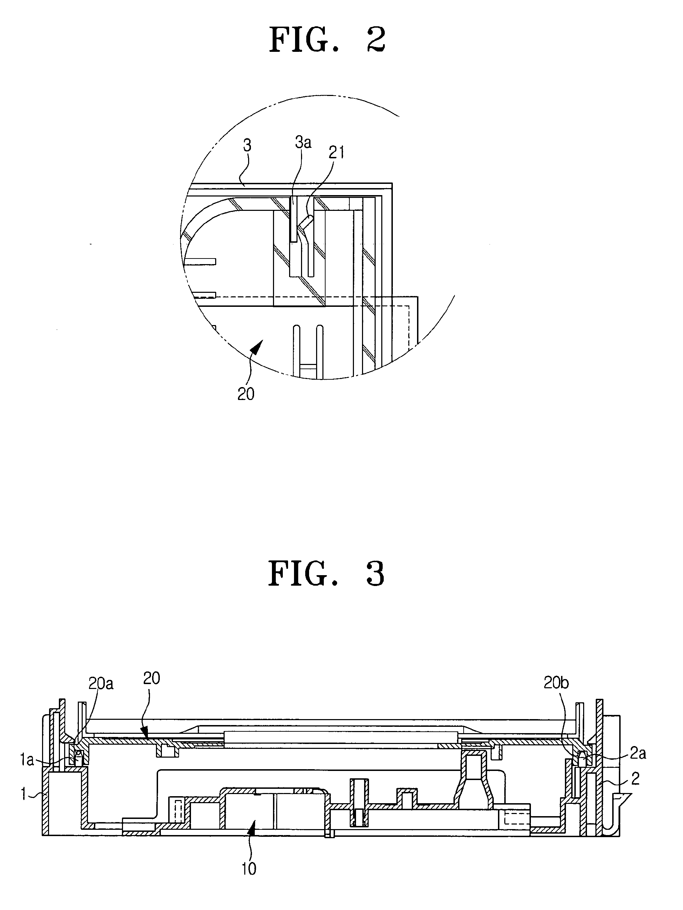

The disc tray 120 formed in the main frame 110 may move in and out of the main frame 110 to the disc loading and unloading positions. An optical disc, which is a recording medium, is mounted thereon. Also, the disc tray 120 has supporting steps 121 formed on both sides thereof. Since a sliding structure (which includes the guide rails 1 a and 1 b and the guide grooves 20a and 20b as shown in Figure 3) of the disc tray 120 with respect to the main frame 110 is the same as that of a conventional optical disc drive, detailed description thereof will be omitted herein.

The vibration preventing device 130 is set up in the fixing grooves 111a formed on both sidewalls 111 and 112 of the main frame 110 and includes a plurality of elastic guides 140 to support the disc tray 120 by elastically pressing the disc tray 120 from the upper part to the lower part thereof. The number of the elastic guides is not limited to any number, in particular, but, in an embodiment of the invention, four elastic guides support the disc tray 120 stably by preventing the disc tray 120 from vibrating so that the disc tray 120 is not shaken. The four elastic guides are positioned with two on each sidewall. The two elastic guides on one sidewall confront with those on the other.

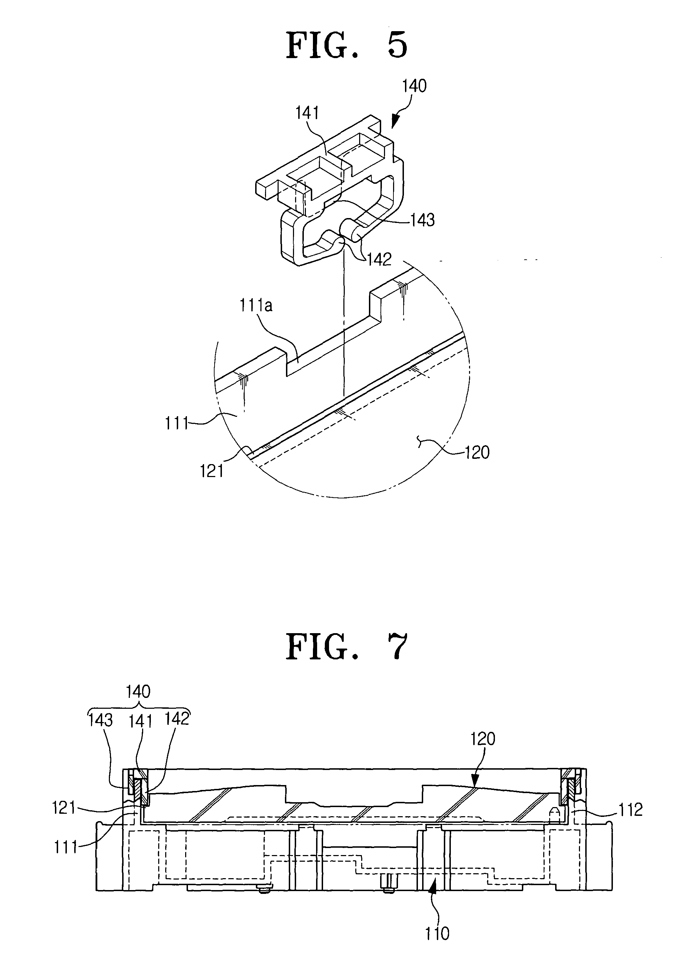

The elastic guides 140 include a body 141, which is inserted to the fixing groove 111 a, a tension unit 142 extended from the body 141 to contact the supporting step 121 of the disc tray 120, and a supporting unit 143 formed apart from the tension unit 142 by a predetermined space to be supported by the external side of the sidewall 111 or 112, as illustrated in Figures 5 and 7.

The tension units 142 of the four elastic guides 140 are brought into contact with the supporting steps 121 of the disc tray 120 elastically to form four vibration preventing units. Therefore, the vibration of the disc tray 120 may be prevented relatively effectively.

Meanwhile, the vibration preventing device 130 of the present invention may include a second vibration preventing unit 150 having a guide rib 151 and a tension rib 152 similar to that of the prior art to help prevent the vibration of the disc tray 120. Such a guide rib 151 would protrude inwardly from the rear wall 113 of the main frame 110. The tension rib 152 would be formed in the rear end of the disc tray 120 to be brought into contact with the guide rib 151 elastically when the disc tray 120 moves to the disc loading position. In an embodiment of the invention, two guide ribs 151 and two tension ribs 152, are individually formed.

In accordance with an embodiment of the present invention, the disc tray 120 is supported elastically by the four elastic guides 140 from the upper part to the down part and, in the disc loading position, the disc tray 120 is supported by the second vibration preventing unit 150 in the right and left. Therefore, the vibration of the disc tray 120 may be prevented relatively effectively and thus vibration-induced noise may be minimized.

Also, since the two elastic guides 140 in the front of the disc tray 120 continue to support the disc tray 120 elastically even when the disc tray 120 is ejected out to the disc unloading position as shown in Figure 6B, preventing the disc tray 120 from shaking up and down is possible.

In accordance with the present invention as described above, the vibration of the disc tray 120 may be prevented effectively and thus the noise generated by the vibration may be minimized because two pairs of elastic guides support the disc tray 120 in both right and left of the back and front parts by elastically pressing the disc tray 120 from the upper part to the lower part.

In addition, since the disc tray 120 is supported by the two elastic guides when it is the disc tray 120 is ejected out to the disc unloading position, the disc tray 120 is not shaken, which makes the disc tray 120 a high-quality and high-end product.

Consequently, the present invention provides a high-quality and high-class optical disc drive that has a fast disc access time and is not vibrated or shaken.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A vibration preventing device (130) to absorb vibration caused by external impact between a first member (110) having both sidewalls (111,112) and a rear wall (113) and a second member(120) formed in the first member (110) to move in and out of the first member (110), comprising:
a plurality of elastic guides (140) formed in the first member (110) to support the second member (120) elastically from the upper part thereof to the lower part thereof.

2. The vibration preventing device of claim 1, wherein the number of elastic guides (140) is four and the four elastic guides (140) are formed in both sidewalls (111, 112) of the first member (110) to confront each other with a predetermined space.

3. The vibration preventing device (130) of claim 1 or claim 2, wherein a fixing groove (111a) is formed in an area where an elastic guide (140) is set up on a sidewall (111, 112), and the elastic guides (140) comprise:
a body unit (141) to be inserted to the fixing groove (111a);
a tension unit (142) extended from the body unit (141) to be brought into contact with the second member (120); and
a supporting unit (143) formed apart from the tension unit (142) by a predetermined space to be supported against the external side of the sidewall (111, 112).

4. The vibration preventing device (130) of any preceding claim, further comprising:
a second vibration preventing unit (150) including a guide rib (151) formed in the rear wall (113) of the first member (110); and
a tension rib (152) formed in the second member (120) to be brought into contact with the guide rib (151) elastically when the second member (120) goes to a withdrawal position.

5. The vibration preventing device (130) of claim 4, wherein the second vibration preventing unit (150) includes two guide ribs (151) and two tension ribs (152).

6. The vibration preventing device (130) of claim 4 or claim 5, wherein the first member (110) is a main frame of an optical disc drive and the second member (120) is a disc tray of the optical disc drive.

7. An optical disc drive, comprising:
a main frame (110) having both sidewalls (111, 112) and a rearwall (113) and having guide rails (1a, 2a) in the inner side of the sidewalls (111, 112);
a disc tray (120) having supporting steps (121) in both edges and moving to a disc loading position or a disc unloading position while supported by the guide rails (1a, 2a) of the main frame (110) to slide; and
two pairs of elastic guides (140) to absorb vibration of the disc tray (120) caused by external impact and/or rotation of a disc by elastically pressing and supporting the disc tray (120) from the upper part thereof to the lower part thereof, the two pairs of elastic guides (140) being formed in the sidewalls (111, 112) to confront each other with a predetermined space.

8. The optical disc drive of claim 7, wherein a fixing groove (111a) is formed in an area where an elastic guide (140) is set up on a sidewall (111, 112), and the elastic guides (140) comprise:
a body unit (141) to be inserted to the fixing groove (111 a);
a tension unit (142) extended from the body unit (141) to be brought into contact with a supporting step (121) of the disc tray (120); and
a supporting unit (143) formed apart from the tension unit (142) by a predetermined space to be supported against the external side of the sidewall (111, 112).

9. The optical disc drive of claim 7 or claim 8, further comprising:
a second vibration preventing unit (150) including a guide rib (151) formed in the rear wall (113) of the main frame (110) and a tension rib (152) formed in the disc tray (120) to be brought into contact with the guide rib (151) elastically when the disc tray (120) goes to a disc loading position.

10. The optical disc drive of claim 9, wherein the second vibration preventing unit (150) comprises two guide ribs (151) and two tension ribs (152).

11. An optical disc drive, comprising:
a main frame (110) including sidewalls (111, 112) having inner sides, and a rear wall (113);
guide rails (1a, 1b) in the inner side of the sidewalls (111, 112);
a disc tray (120) to be slidably supported in the guide rails (1a, 1b) so as to selectively occupy a disc loading position and a disc unloading position; and
elastic guides (140) to substantially evenly and elastically press the disc tray (120) toward the guide rails (1a, 1b).

12. The optical disc drive according to claim 11, further comprising fixing grooves (111a) in the sidewalls (111, 112) in which the elastic guides (140) are positioned.

13. The optical disc drive according to claim 11 or claim 12 wherein the elastic guides (140) comprise four elastic guides (140) that are positioned with two on each sidewall (111,112).

14. The optical disc drive according to claim 13, wherein the two elastic guides (140) on each sidewall (111,112) are opposite to the other two elastic guides (140).

15. The optical disc drive according to any one of claim 11 to claim 14, wherein the elastic guides (140) comprise:
a body (141) to be inserted into the fixing groove (111a);
a tension unit (142) to extend from the body (141) so as to contact the disc tray (120); and
a supporting unit (143) formed apart from the tension unit (142) by a predetermined space to be supported by an external side of the sidewall (111, 112).

16. The optical disc drive according to claim 15, wherein the tension units (142) of the elastic guides (140) elastically contact with the disc tray (120) to form four vibration preventing units (130).

17. The optical disc drive according to any one of claim 11 to claim 16, further comprising a second vibration preventing unit (150) having a guide rib (151) and a tension rib (152).

18. The optical disc drive according to claim 17, wherein the guide rib (151) protrudes inwardly from the rear wall (113) of the main frame (110) and the tension rib (152) is formed in the rear end of the disc tray (120) to be brought into elastic contact with the guide rib (151) when the disc tray (120) moves to the disc loading position.

19. An optical disc drive, comprising:
a main frame (110) including sidewalls (111, 112) having inner sides, and a rear wall (113);
guide rails (1a, 1b) in the inner side of the sidewalls (111, 112);
a disc tray (120) to be slidably supported in the guide rails (1a, 1b) so as to selectively occupy a disc loading position and a disc unloading position; and
elastic guides (140) to substantially evenly and elastically press the disc tray (120) toward the guide rails (1a, 1b) so as to substantially prevent vibration of the disc tray (120) and to substantially reduce vibration induced noise.

20. An optical disc drive, comprising:
a main frame (110) including sidewalls (111, 112) having inner sides, and a rear wall (113);
guide rails (1a, 1b) in the inner side of the sidewalls (111, 112);
a disc tray (120) to be slidably supported in the guide rails (1a, 1b) so as to selectively occupy a disc loading position and a disc unloading position; and
elastic guides (140) to substantially evenly and elastically press the disc tray (120) toward the guide rails (1a, 1b) so as to support the disc tray (120) when the disc tray (120) occupies the unloading position.
